# EUROPEAN PATENT SPECIFICATION

(11) **EP 2 642 185 B1**
(45) Date of publication and mention of the grant of the patent: **03.05.2017**
(21) Application number: 12160889.7
(22) Date of filing: 22.03.2012
(51) Int. Cl.: F21S 8/08, F21S 9/03, F21V 15/01, F21V 21/10, F21V 21/38, F21V 21/15, F21W 131/10, F21Y 115/10

(54) **Post with compact solar units**
Pfosten mit kompakten Solareinheiten
Montant présentant des unités solaires compactes

(43) Date of publication of application: 25.09.2013
(73) Proprietor: Kösedag Tel Örme Sanayi Ve Ticaret Ithalat Ihracat A.S., 34940 Istanbul (TR)
(72) Inventor: Kösedag, Ali, 34390 Istanbul (TR)
(74) Representative: Sevinç, Erkan

(56) References cited:
- EP-A1- 2 378 037
- EP-A1- 2 481 975
- WO-A2-2011/115418
- DE-A1- 10 026 524
- DE-U1- 29 519 098
- JP-A- 2011 210 483
- TW-A- 201 104 147
- US-A- 3 323 765
- US-A- 3 341 718
- US-A- 5 367 442

## Description

### Technical Field of the Invention

The present invention relates to a post solar power illumination means adapted to be mounted on posts erected around an area, e.g. a residential area. In particular, the present invention relates to a post solar unit having solar energy storage means.

### Background of the Invention

The present invention concerns an outdoor lighting fixture as defined in the preamble to Claim 1.

In the art outdoor lighting fixtures especially used in lighting road and courtyard areas with a light fixture pillar, or post, anchored in the ground are well known. A light fixture of this type is fed through the general electricity distribution network.

It is a particular object of the invention to disclose an outdoor lighting fixture which can be installed with ease and in a simple way virtually anywhere and which can operate apart from the general distribution network.

The system of the invention has a crucial role especially in case of rescue operations taking place after natural disasters such as earthquakes. The country of the present applicant is an earthquake country in which major earthquakes occur on a yearly basis. In case of an earthquake, it is extremely important that rescue operations are continued during night time and in conditions where silence prevails as much as possible for the unique reason that rescue teams could scan and catch voices from under ruins. Therefore, a mobile outdoor lighting fixture which can easily replace noisy generators in a functionally equivalent manner is a life savior for rescue teams during earthquake rescue operations.
The outdoor lighting fixture of the invention is characterized by that which is stated in Claim 1.
As taught by the invention, the outdoor lighting fixture comprises a storage battery installed inside the lighting fixture.

A plurality of patents/patent applications are present in the field in relation to posts and to their configuration with regards to fixing of posts and/or fences and fittings thereof.
The present invention on the other hand provides a post solar unit adapted to a post to let it function as an illuminating post. The cap has a solar panel associated with a battery to store solar energy. The concept of use of solar energy in posts for illumination purposes is known for example from the publication US 2008080174.

DE10026524A1 discloses a solar lighting unit for providing illumination. The unit is in the form of a pillar that has solar energy cells built into an angled panel which can be turned through an arc. The cells are connected with storage cells that power lighting elements in the center section. Within the unit there may be a driven mechanism for turning the solar panel.

US5367442A discloses a self-contained solar powered lamp. The solar powered lamp comprises an electrical storage device disposed in heat transfer proximity to a solar cell array. The electrical storage device is adapted to increase its acceptance of charge, provided by the solar cell array, at elevated temperatures. The solar powered lamp is also configured to permit flow of air through the lamp and to be assembled and disassembled with ease.

The advantage of the system according to the present invention lies in that the proposed post solar units impart an improved performance to illuminating posts such that they are equipped with solar panels.
The present invention features a compact post solar unit having a solar panel embedded within a solar panel housing. This is advantageous in itself in that said solar units can either be used while conventionally installed on posts or can be suspended from wires or ropes stretched between neighboring posts. As said solar units are waterproof, it is also possible to let said solar units float on the sea level as illuminated place indicators by anchoring them to the sea ground.

The present invention provides that posts equipped with said solar units also function as motion detectors to detect potentially unauthorized access. For instance military areas encircled by posts of the type according to the invention are crucial in detecting possible unauthorized entry attempts. This also proves to be useful around residential or other areas where extra illumination is desired.

### Objects of the Invention

One of the objects of the present invention is to provide a post solar unit which incorporates a solar panel in association with a battery.

Another object of the present invention is to provide a post having motion detection function to detect potentially unauthorized access.

Another object of the present invention is to provide a post solar unit where a more efficient use of power accumulated by the solar panel within said solar units is achieved.

Another object of the present invention is to provide a mobile illumination post which can easily replace noisy generators during night time earthquake rescue operations in a functionally equivalent manner.

### Summary of the Invention

The present invention provides a post solar unit suitable for mounting on a hollow tubular post body having longitudinal channels extending so as to define and delimit a longitudinal space.

Said elements are powered by a solar panel within said solar unit. Further, an electrical battery is provided in association with said solar panel. Said battery is conveniently provided within the solar unit.

The components of the post solar unit consist of a solar unit frame onto which a sealing element is secured by means of a grooved rim. Said solar unit frame is rotatable around its base such that said solar panel's inclined outer surface can be positioned to face a certain desired direction.

The present invention further provides that said posts are equipped with motion detectors to detect unauthorized attempts. For instance military areas encircled by posts of the type according to the invention may be helpful in detecting possible unauthorized entry attempts. This can also prove useful around areas where extra illumination is desired.

The present invention further ensures that the illumination post is erectable in areas where atmosphere conditions along with surface topography combine to create vast regions of dusty plains. Heavy wind storms in a sandy environment may prove that heavy wind pressure erodes solar panel cap surfaces to prevent solar energy accumulation. However, the illumination posts according to the present invention are utterly convenient for desert areas as no electrical supply is needed and vast desert areas can conveniently illuminated by solar power. To this end, the present invention ensures that the caps of the posts under which solar panels are disposed are suitable for use in desert areas where heavy wind storms occur.

### Brief Description of the Figures

The figures whose brief explanations are herewith provided are solely intended for providing a better understanding of the present invention and are as such not intended to define the scope of protection or the context in which said scope is interpreted in the absence of the present description.
Fig. 1a demonstrates a general perspective view of the post profile according to the present invention.
Fig. 1b demonstrates a cross-sectional view of the post profile according to the present invention.

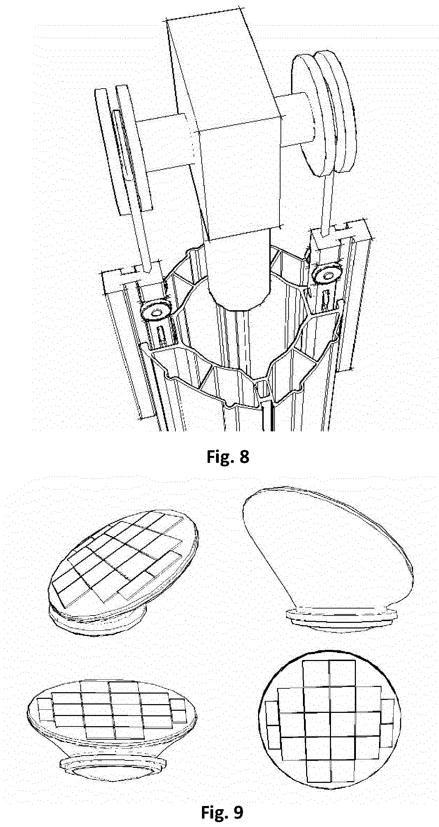

Fig. 2 and Fig. 8 demonstrate perspective views of the post profile with the illumination means lifting mechanism according to the present invention.

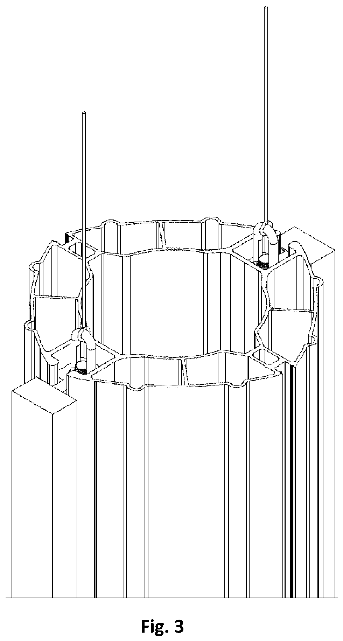

Fig. 3 demonstrates another perspective view of the post profile while the illumination means lifting mechanism rollers are within the profile according to the present invention.

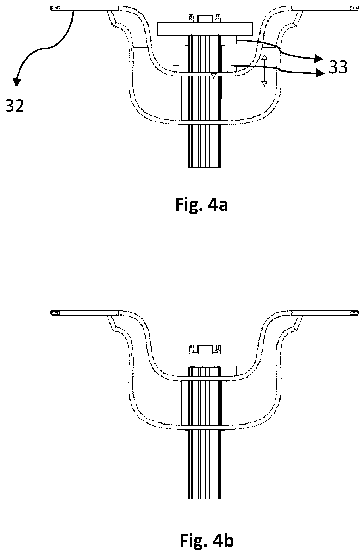

Fig. 4a and 4b respectively demonstrates planar views of the positions before and after the illumination means framework reaches its operational position according to the present invention. Fig. 10a demonstrates a perspective view of an alternative design of said illumination means framework according to the present invention.

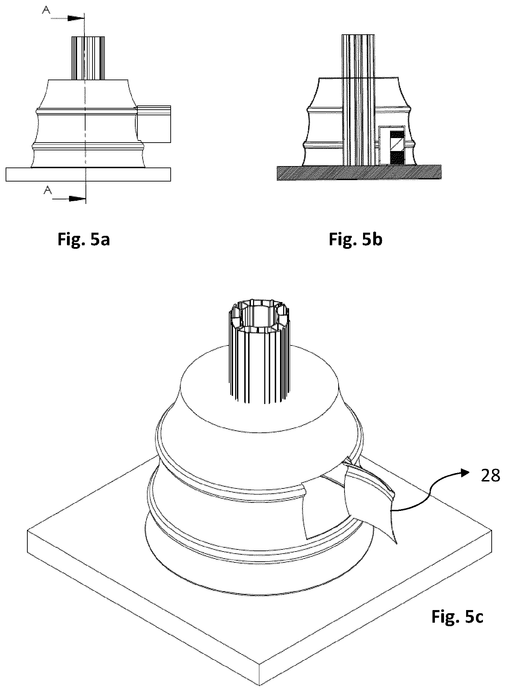

Fig. 5a demonstrates a planar view of the post base according to the present invention. Fig. 5b demonstrates a cross-sectional view taken along the A-A line as indicated in Fig. 5a. Fig. 5c demonstrates a perspective view of the base according to the present invention.
Fig. 6 demonstrates an exploded view of the post solar unit according to the present invention and Fig. 9 demonstrates an alternative embodiment of the solar unit housing.
Fig. 7a demonstrates an perspective view of an erected operable post according to the present invention. Fig. 7b demonstrates a longitudinal cross-sectional view of the post indicating dome-shaped caps according to the present invention.
Fig. 8 demonstrates an perspective view of the pulley mechanism according to the present invention.
Fig. 9 demonstrates perspective views of a solar panel unit according to the present invention.
Fig. 10a demonstrates a perspective view of the post according to the present invention.
Fig. 11 demonstrates an exploded perspective view of the base unit components according to certain aspects of the present invention.
Fig. 12 demonstrates a general perspective view of the base unit according to certain aspects of the present invention.
Fig. 13a and 13b respectively demonstrates the base unit according to certain aspects of the present invention with and without a central flange portion.
Fig. 14 demonstrates water discharge path of the base unit according to certain aspects of the present invention.

### Detailed Description of the Invention

Referring now to the figures outlined above, the present invention provides a post (11) with a solar panel unit (12) disposed as explained hereinafter.

The present invention concerns an outdoor lighting fixture as defined in the preamble to Claim 1 whereby an outdoor lighting fixture especially used in lighting road and courtyard areas is achieved in the form of a light fixture pillar, or post, either anchored in the ground or provided with wheels to enable easy displacement.

The particular use of the outdoor lighting fixture according to the disclosed invention concerns an outdoor lighting fixture which can be installed with ease and in a simple way virtually anywhere and which can operate apart from the general distribution network.

Said outdoor lighting post (11) is shaped to have a longitudinally hollow profile (29) with a circular-like cross-section in the form of an inner profile. Said longitudinally hollow profile (29) although being circular-like in the preferred embodiment, it is not necessary to use this form and various other shapes in cross section (e.g. ellipse, triangle, square, pentagonal, hexagonal or other polygonal shapes) may be utilized for providing a post (11).

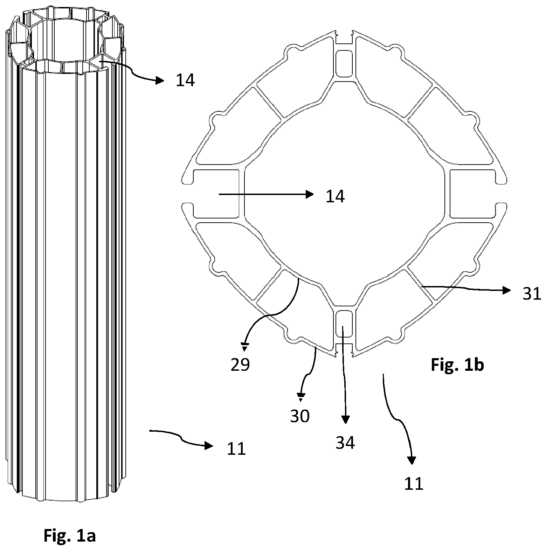

The longitudinally hollow profile (29) of the outdoor lighting post (11) has cavities (34) on its lateral surfaces for incorporating LED elements. As might be seen on Fig. 1b, the LED elements may be provided 180 degrees apart on the lateral surfaces of said post (11). Said longitudinal cavities (34) receiving said LED elements are closed by longitudinal coverings providing a dovetail connection with the open end of said cavities (34). Said coverings provide the effect that said LED elements are protected against environmental factors such as humidity and rainy weather conditions. Further, said coverings when mounted, providing a flush communication with the remaining outer surface of the post (11) provides both a more aesthetical and a concealed or at least less noticeable configuration to a casual intruder. Said coverings are made out of polycarbonate for maximum security. This is especially advantageous against intrusion attempts using a sharp object such as a screwdriver for damaging the LED elements.

The post (11) according to the present invention comprises a cap produced of transparent material in order to obtain solar rays on a solar panel (23). The cap's geometrical form is similar to a dome form for focusing solar rays onto said solar panel (23) surface. Said dome-form cap may integrate further optical elements optimizing and assisting in solar energy accumulation. The caps according to the present invention are made out of polycarbonate material to maintain functionality of the solar panels (23) in environments where prolonged and repetitive wind storms may cause erosion on said caps' surface to the extent that solar rays are blocked. Polycarbonate material is also functional in terms of preventing formation of a stable dust particle film on the outer surface.

The post (11) of the present invention is provided such that it features a double profile post (11) in which an outer profile (30) is connected to a longitudinally hollow profile (29) by means of a plurality of preferably symmetrically arranged bridges (31). To this end, said post (11) features a first closed geometry longitudinally hollow profile (29) interconnected by bridging elements (31) to a second closed geometry longitudinally extending profile (30) enclosing said longitudinally hollow profile (29).

Said solar unit (12) is shaped and dimensioned to be mounted on a carrier framework (13) with holder slots (32) receiving said solar units (12), typically serving to the purpose of supporting the same.

The solar unit (12) according to the present invention can be adapted to be mounted on a plurality of posts (11) having different cross-sections. Said posts (11) have at least one longitudinal channel (14) accommodating a movable block (15) having rollers (16). Said movable blocks (15) displace in said longitudinal channels (14) in order for raising and lowering said solar units (12) relative to the ground surface on which said posts (11) are erected. This is achieved by means of an electrical motor (17) whose rotary shaft is conventionally coupled to a pulley (18) mechanism in communication with a wire (19), the latter carrying said movable block (15).

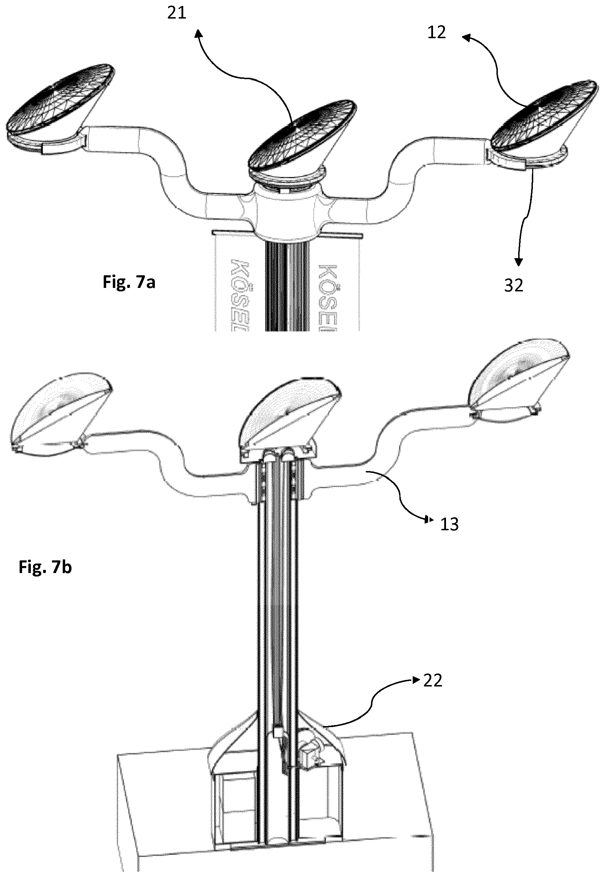

The solar units (12) are provided at both sides of the post (11) as indicated in Fig. 7. Said carrier framework (13) being in association with said movable blocks (15) therefore provides that said solar units (12) mounted on said framework (13) are lowered by means of said electrical motor (17), for instance for maintenance purposes.

The present invention ensuring easier repair of post solar units (12) by maintenance workers is especially advantageous in substantially accelerating maintenance and repair operations. Considering quite a large number of posts may require routine maintenance in a large area (for instance a military area), delayed maintenance operations prove to be considered as a serious cost item.

The illumination means according to the invention are LEDs (light emitting diodes) embedded within a central housing (21) above the electrical motor (17). Said illumination means may be separately provided on said carrier framework (13).

The present invention further provides that more efficient power consumption is achieved by making use of LED elements powered on and off appropriately in order for saving power. This arrangement can be realized by means of a PWM module driving the LED elements with an appropriate duty cycle.

LED-driver circuits can be dimmed by applying a variable duty cycle (pulse-width modulation, or PWM) to the LED. Applying PWM current to the LED yields an average power comparable to that of dc control. PWM control can be implemented with a simple circuit consisting of a dual comparator producing a desired frequency PWM signal and a duty cycle adjustable from 0% to 100%.

The comparator's first side can be configured as an oscillator producing a triangular waveform and the other side comparing the triangle waveform with the DC control signal and generates a PWM signal. PWM signal generation and duty cycle control is widely practiced in the art and is extensively known to the person in the art.

Said electrical motor (17) is powered by a base battery embedded within said base (22). Said motor's (17) power leads extend to the base (22) of said post (11) through its central hollow space, i.e. the longitudinally hollow profile (29). To this end, said motor (17) is continuously connected to said base battery. Said motor (17) may also be remotely actuated by signals from a suitable radio transmitter as is conventionally practiced in the available art. Upon termination of routine maintenance or repair, said motor (17) is reactuated to reposition said framework (13) to its initial position. Said motor's base battery connection is not affected by moving parts of the mechanism, i.e. the displacement of said framework (13). The initial position of the same is easily detected by microswitches (33) upon which said lighting means in said central housing (21) are powered by said solar units (12).

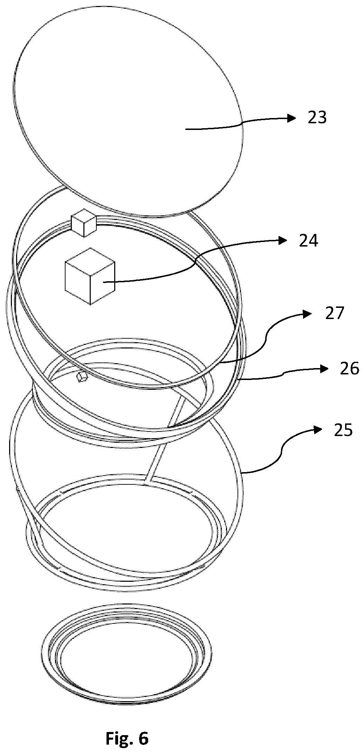

The present invention provides a compact solar energy station such that said illuminating elements in said central housing (21) are powered by a solar panel (23) as shown in Fig. 6. Said solar panel (23) is in electrical communication with a rechargeable electrical battery (24, symbolically shown in Fig. 6). To this end, a post (11) is conveniently provided with a carrier framework (13) having solar units (12) and a central housing embedding an electrical motor (17) and illumination means.

Fig. 6 according to the present invention demonstrates the main components of the post (13) solar unit (12) where said solar panel (23) is maintained within a solar unit frame (25) onto which a sealing element (27) is secured by means of a grooved rim (26). Said solar unit frame (25) is rotatable around its base such that said solar panel's (23) inclined outer surface can be positioned to face a certain desired direction.

The base (22) according to the present invention provides a further security feature such that the post (11) anchors securing the same to the ground are concealed by a base (22) housing. Said housing comprises a lockable lid (28) which prevents intruders from reaching the anchors. It is to be noted that it is not entirely uncommon that intruders intend to steal posts.
The present invention further provides that said posts (11) are equipped with motion detectors to detect unauthorized attempts. For instance military areas encircled by posts (11) of the type according to the invention may be helpful in detecting possible unauthorized entry attempts. This can also prove useful around areas where extra illumination is optionally desired.
Conventional motion detection devices with infrared light or laser technology may be used for optical detection in the posts (11) of the invention.
The present invention's easy repair principle can easily be adapted to be implemented such that lighting means are provided within said holder slots (32) being in association with said carrier framework (13).

An electronic control unit according to the invention incorporates sub-circuits for driving said lighting means in accordance with the information from said motion detectors and for communicating the information as to the location of the posts (11) where unauthorized access is in question.

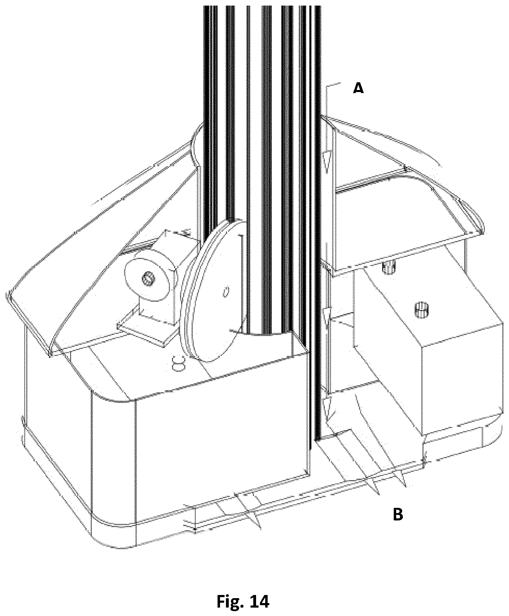

In a nutshell, the present invention proposes a post (11) comprising a base (22), at least one lighting means, a motion detector and a carrier framework (13) with holder slots (32) for receiving at least one solar unit (12). Said at least one solar unit (12) has a solar panel (23) in electrical communication with a rechargeable battery (24). Said solar panel (23) is maintained within a solar unit frame (25) and said solar unit frame (25) is seated in said holder slot (32). Said at least one lighting means is powered by said rechargeable battery (24) upon a signal from said motion detector.

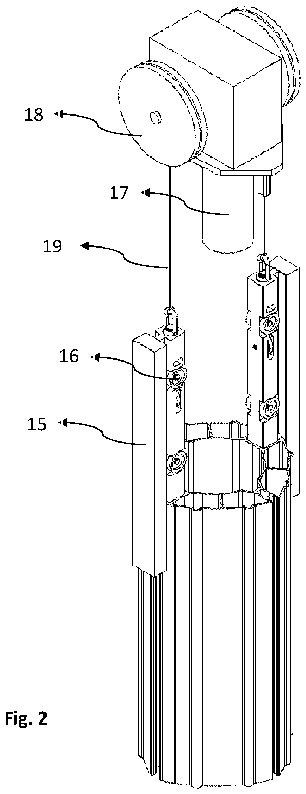

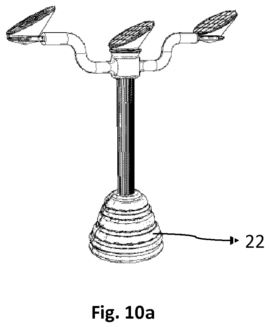

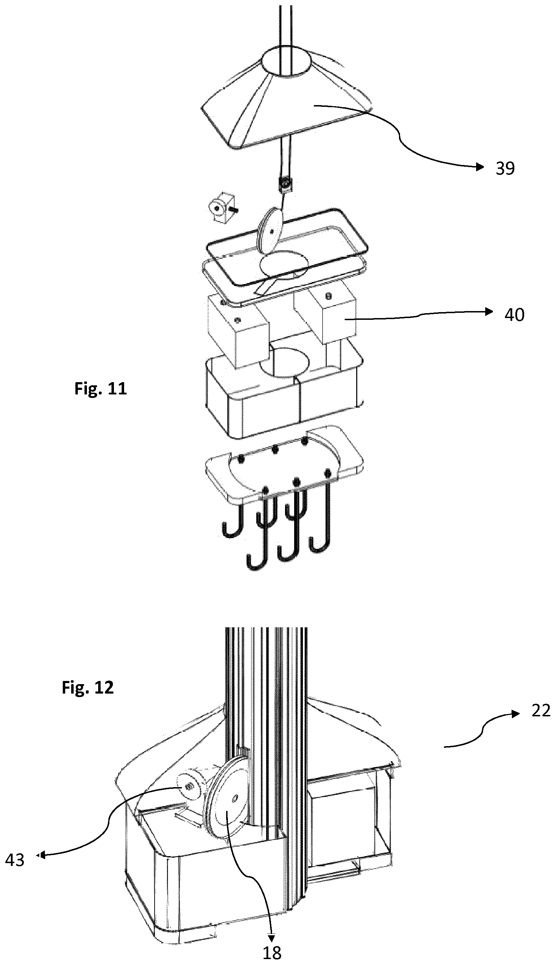

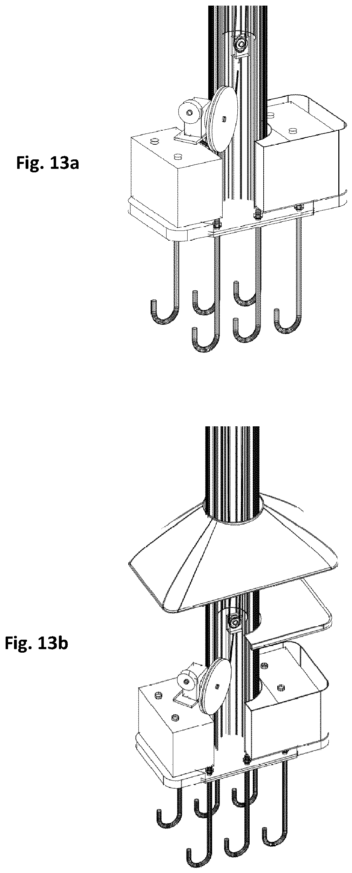

The figures 11 to 14 demonstrate an alternative base unit (22) embodiment different than that shown in Fig. 10a in terms of physical structure. The base unit (22) embodiment of Fig. 11 comprises a central flange portion (39) annularly encircling said post (11) body above said base unit (22), an inner housing receiving at least one electrical battery (40) and anchoring means for ground fixation. In an alternative embodiment not covered by the present invention as defined by the claims, the post (11) may comprise a manual drive coupling (43) in said base unit (22) for operating said pulley mechanism (18). Said manual drive coupling (43) may be operated by means of a conventional drilling tool in the possession of maintenance and repair workers such that said pulley mechanism (18) installed within said base (22) instead of being coupled to the shaft of said electrical motor (17) as in the embodiment of Fig. 2 according to the present invention is operated.
The base unit (22) of the invention provides a water discharge path A-B within said base (22) as shown by respective arrows in Fig. 14. Water penetrating into said base (22) through annular openings in between the post (11) body and said central flange portion (39) advances parallel to the post (11) body and is discharged from lateral openings on the ground.

## Claims

1. A post (11) having a longitudinally hollow profile (29) and comprising a base (22), at least one lighting means and a carrier framework (13) having one or more holder slots (32) for receiving at least one solar unit (12) having a solar panel (23) and a rechargeable battery (24), said solar panel (23) being in electrical communication with said rechargeable battery (24) and being maintained within a solar unit frame (25), said solar unit frame (25) being seated in one of said one or more holder slots (32), said at least one lighting means being powered by said rechargeable battery (24), wherein said solar unit frame (25) comprises a cap of transparent material made out of polycarbonate material,
**characterized in that** said post (13) further comprises at least one longitudinal channel (14) accommodating a movable block (15) displaceable in said longitudinal channel (14) by means of an electrical motor (17), said movable block (15) being fixedly joined to said carrier framework (13).

2. A post (11) as set forth in Claim 1 wherein said solar unit frame (25) is rotatable around its base in the holder slot (32) in which said solar unit frame (25) is seated, such that said solar panel's (23) inclined outer surface is positionable to face a certain direction.

3. A post (11) as set forth in Claim 1 wherein said longitudinally hollow profile (29) features a closed geometry in which said electrical motor (17) is stationarily installed such that a central housing (21) located immediately above said longitudinally hollow profile (29) contains a pulley (18) mechanism.

4. A post (11) as set forth in Claim 3 wherein said lighting means are LEDs embedded within said central housing (21).

5. A post (11) as set forth in Claim 1 or 4 wherein anchors of said post (11) securing the same are concealed by a base (22) housing, said housing comprising a lockable lid (28) which prevents intruders from having said anchors in sight.

6. A post (11) as set forth in Claim 1 or 4 wherein said base (22) is provided with wheels to enable easy displacement.

7. A post (11) as set forth in Claim 3 wherein said longitudinally hollow profile (29) has cavities (34) on its lateral surfaces for incorporating LED elements.

8. A post (11) as set forth in Claim 7 wherein said cavities (34) are closed by longitudinal coverings providing a dovetail connection with the open end of said cavities (34).

9. A post (11) as set forth in Claim 1 wherein said electrical motor (17) is powered by an electrical battery (40).

10. A post (11) as set forth in Claim 9 wherein said electrical battery (40) is embedded within said base (22).

11. A post (11) as set forth in Claim 1 wherein said motor's (17) power leads extend to said base (22) of said post (11) through its longitudinally hollow profile (29).

12. A post (11) as set forth in Claim 1 wherein said motor (17) is remotely actuated by signals from a radio transmitter.

## Patentansprüche

1. Ständer (11) mit einem länglichen Hohlprofil (29) und mit
- einem Fuß (22),
- zumindest einer Beleuchtungseinrichtung und
- einem Tragrahmen (13) mit einer oder mehreren Halteausnehmungen (32) zum Aufnahmen zumindest einer Solareinheit (12) mit einem Solarpaneel (23) und einer aufladbaren Batterie (24),
wobei das Solarpaneel (23) in elektrischer Verbindung mit der aufladbaren Batterie (24) steht und in einem Solareinheit-Rahmen (25) gehalten ist, wobei der Solareinheit-Rahmen (25) in einer der einen oder mehreren Halteausnehmungen (32) angeordnet ist, wobei die zumindest eine Beleuchtungseinrichtung durch die aufladbare Batterie (24) versorgt ist, wobei der Solareinheit-Rahmen (25) einen Deckel aus einem transparenten Material aus einem Polycarbonatmaterial aufweist, **dadurch gekennzeichnet,**
**dass** der Ständer (11) weiterhin zumindest einen länglichen Kanal (14) aufweist, welcher einen bewegbaren Block (15) aufnimmt, welcher in dem länglichen Kanal (14) durch einen Elektromotor (17) verschiebbar ist, wobei der bewegbare Block (15) fest mit dem Tragrahmen (13) verbunden ist.

2. Ständer (11) nach Anspruch 1,
wobei der Solareinheit-Rahmen (25) um seinen Fuß in der Halteausnehmung (32) drehbar ist, in welcher der Solareinheit-Rahmen (25) angeordnet ist, so dass eine geneigte Außenfläche des Solarpaneels (23) zur Ausrichtung in eine bestimmte Richtung positionierbar ist.

3. Ständer (11) nach Anspruch 2,
wobei das längliche Hohlprofil (29) einen geschlossenen Umfang aufweist, in welchem der Elektromotor (17) stationär eingebaut ist, so dass ein Mittengehäuse (21), welches unmittelbar über dem länglichen Hohlprofil (29) angeordnet ist, einen Mechanismus mit Scheibe (18) enthält.

4. Ständer (11) nach Anspruch 3,
wobei die Beleuchtungseinrichtung LEDs sind, welche in dem Mittengehäuse (21) eingebaut sind.

5. Ständer (11) nach einem der Ansprüche 1 bis 4,
wobei Anker des Ständers (11) zu dessen Befestigung durch ein Gehäuse des Fußes (22) verdeckt sind, wobei das Gehäuse eine verschließbare Klappe (28) aufweist, welche eine Offenlegung der Anker gegenüber Eindringlingen verhindert.

6. Ständer (11) nach einem der Ansprüche 1 bis 4,
wobei der Fuß (22) mit Rädern für ein vereinfachtes Verschieben versehen ist.

7. Ständer (11) nach Anspruch 3,
wobei das längliche Hohlprofil (29) an seinen Seitenflächen Hohlräume (34) zum Einbau von LED-Elementen aufweist.

8. Ständer (11) nach Anspruch 7,
wobei die Hohlräume (34) durch längliche Abdeckungen verschlossen sind, wobei eine Schwalbenschwanzverbindung mit dem offenen Ende der Hohlräume (34) gebildet ist.

9. Ständer (11) nach Anspruch 1,
wobei der Elektromotor (17) durch eine elektrische Batterie (40) angetrieben ist.

10. Ständer (11) nach Anspruch 9,
wobei die elektrische Batterie (40) in dem Fuß (22) eingebaut ist.

11. Ständer (11) nach Anspruch 1,
wobei Stromleitungen des Motors (17) sich durch das längliche Hohlprofil (29) zu dem Fuß (22) des Ständers (11) erstrecken.

12. Ständer (11) nach Anspruch 1,
wobei der Motor (17) durch Signale von einem Funksender fernbedienbar ist.

## Revendications

1. Montant (11) ayant un profil longitudinalement creux (29) et comprenant une base (22), au moins un moyen d'éclairage et une ossature de support (13) ayant une ou plusieurs fentes de support (32) pour recevoir au moins une unité solaire (12) ayant un panneau solaire (23) et une batterie rechargeable (24), ledit panneau solaire (23) étant en communication électrique avec ladite batterie rechargeable (24) et étant maintenu à l'intérieur d'un bâti d'unité solaire (25), ledit bâti d'unité solaire (25) étant installé dans l'une desdites une ou plusieurs fentes de support (32), ledit au moins un moyen d'éclairage étant alimenté par ladite batterie rechargeable (24), dans lequel ledit bâti d'unité solaire (25) comprend un capuchon en matériau transparent réalisé à partir de polycarbonate, **caractérisé en ce que** ledit montant (13) comprend en outre au moins un canal longitudinal (14) logeant un bloc mobile (15) déplaçable dans ledit canal longitudinal (14) au moyen d'un moteur électrique (17), ledit bloc mobile (15) étant assemblé de manière fixe à ladite ossature de support (13).

2. Montant (11) selon la revendication 1, dans lequel ledit bâti d'unité solaire (25) peut tourner autour de sa base dans la fente de support (32) à l'intérieur de laquelle ledit bâti d'unité solaire (25) est installé, de sorte que la surface externe inclinée dudit panneau solaire (23) peut être positionnée pour faire face à une certaine direction.

3. Montant (11) selon la revendication 1, dans lequel ledit profil longitudinalement creux (29) présente une géométrie fermée dans laquelle ledit moteur électrique (17) est installé de manière fixe de sorte qu'un boîtier central (21) logé immédiatement au-dessus dudit profil longitudinalement creux (29) contient un mécanisme de poulie (18).

4. Montant (11) selon la revendication 3, dans lequel lesdits moyens d'éclairage sont des LED encastrées à l'intérieur dudit boîtier central (21).

5. Montant (11) selon la revendication 1 ou 4, dans lequel des ancrages dudit montant (11) fixant ce dernier sont dissimulés par un boîtier de base (22), ledit boîtier comprenant un couvercle verrouillable (28) qui empêche les intrus de voir lesdits ancrages.

6. Montant (11) selon la revendication 1 ou 4, dans lequel ladite base (22) est prévue avec des roues pour faciliter le déplacement.

7. Montant (11) selon la revendication 3, dans lequel ledit profil longitudinalement creux (29) a des cavités (34) sur ses surfaces latérales pour incorporer des éléments de LED.

8. Montant (11) selon la revendication 7, dans lequel lesdites cavités (34) sont fermées par des recouvrements longitudinaux fournissant un raccordement à queue d'aronde avec l'extrémité ouverte desdites cavités (34).

9. Montant (11) selon la revendication 1, dans lequel ledit moteur électrique (17) est alimenté par une batterie électrique (40).

10. Montant (11) selon la revendication 9, dans lequel ladite batterie électrique (40) est encastrée à l'intérieur de ladite base (22).

11. Montant (11) selon la revendication 1, dans lequel les fils d'alimentations dudit moteur (17) s'étendent jusqu'à ladite base (22) dudit montant (11) par son profil longitudinalement creux (29).

12. Montant (11) selon la revendication 1, dans lequel ledit moteur (17) est actionné à distance par des signaux provenant d'un émetteur radio.
